# EUROPEAN PATENT APPLICATION

(11) **EP 4 300 179 A1**
(43) Date of publication of application: **03.01.2024**
(21) Application number: 22770184.4
(22) Date of filing: 18.01.2022
(51) Int. Cl.: G02F 1/1335, G02B 5/02

(54) **MINI LED DIFFUSER, PREPARATION PROCESS THEREFOR, AND BACKLIGHTING MODULE**

(30) Priority: 19.03.2021 CN 202110297612
(71) Applicant: Nicrotek Co., Ltd, Suzhou, Jiangsu 215026 (CN); Yancheng Nicrotek Co., Ltd, Yancheng, Jiangsu 224199 (CN); Soochow University, Suzhou, Jiangsu 215123 (CN)
(72) Inventor: ZHANG, Heng, Suzhou, Jiangsu 215026 (CN); FANG, Zongbao, Suzhou, Jiangsu 215026 (CN); CHEN, Linsen, Suzhou, Jiangsu 215026 (CN); ZHOU, Xin, Suzhou, Jiangsu 215026 (CN); GUAN, Haoyuan, Suzhou, Jiangsu 215026 (CN); SI, Qunying, Suzhou, Jiangsu 215026 (CN)
(74) Representative: Sun, Yiming
(86) International application number: PCT/CN2022/072542
(87) International publication number: WO 2022/193824

(57) **Abstract**

A mini LED diffuser (12), a manufacturing process therefor, and a backlight module are disclosed. The diffuser (12) comprises a substrate (121), a plurality of microstructures disposed on one side of the substrate (121) and a filling structure disposed on the other side of the substrate (121). The microstructures comprise a plurality of microlens structures (122). The filling structure comprises a plurality of structural units. The structural units comprise a plurality of filling patterns (123) distributed based on equal density lines. A distribution density of the filling patterns (123) in one structural unit gradually decreases from a center of the one structural unit toward a periphery. Each of the filling patterns is a groove structure, and each of the filling patterns is filled with a reflective material (1231). In this way, a lamp bead panel can uniformly emit light, thereby improving utilization efficiency of light, and enhancing a transmittance while ensuring a haze. In addition, by means of a superposed photolithography technology, a proportion of space occupied by the microlens structures (122) can reach 100%.

## Description

### Field of the Invention

The present invention relates to the technical field of backlight display, and in particular, to a mini LED diffuser, a manufacturing process therefor, and a backlight module.

### Background technology

A mini LED array serves as a light source of a backlight module, and has broad application prospects in display industries such as televisions, computers, mobile phones, and vehicles. A size of a mini LED chip is generally in a range of 100 µm to 500 µm. The mini LED chip is mainly used in a direct-lit backlight display system, and has advantages such a little size, a higher brightness, and higher response speed, and is partly adjustable compared to a traditional LED light source.

A divergence angle of light emitted by a single mini LED point light source is limited, resulting in a higher energy in a central area of a light emergence surface compared to surrounding areas. In addition, distances between mini LED chips are in a range of 1 mm to 4 mm. Therefore, an array light formed by a plurality of mini LED chips causes light and dark areas to alternately occur on a screen, which results in a poor visual effect and affects user experience. In a traditional technology, a light emergence surface of the mini LED chip is usually covered with a diffusion film based on diffusion particles, to achieve light diffusion and mixing, thereby implementing uniform light emission from the light emergence surface. However, a light mixing distance corresponding to the manner is in a range of a few millimeters to a few centimeters, which does not meet a future requirement on thinning in the display industry.

Although many types of light homogenizers appear in the market, a haze and a transmittance of light homogenizers cannot be well balanced, and therefore a purpose of ensuring a desirable transmittance while realizing a specific haze cannot be achieved. Especially in manufacturing of preparation of some thicker light homogenizers, in order to achieve a specific haze, a large number of the diffusion particles are usually added to manufacturing materials. The diffusion particles absorb light, which affects a transmittance of the light homogenizers. If the transmittance is not high, a relatively large backlight power is required, which not only consumes a lot of energy but also affects service lives of lamp beads. In some existing technologies, structures on two sides of the light homogenizer are in the shape of a pyramid, a prism, or an orthogonal cylinder, which are machined by a diamond lathe. At least two layers of films are required for the light homogenizer to achieve a uniform light, and the films need to be aligned and orthogonally stacked, which is very inconvenient when assembling a backlight module. In some other existing technologies, glass beads are collated on a substrate of the light homogenizer to form protruding and recessed points. Since an optical adhesive is used during the formation, a transmittance of the light homogenizer is affected. In some other existing technologies, a composite film obtained by gluing two light equalization films each having a prism or glass bead structure on a single surface is used. The composite film has a relatively large thickness, and is not suitable for an ultra-thin device.

The information disclosed in this part is merely used for understanding the background of concept of the present invention. A new technical solution is provided in conjunction with the above existing technical problems.

### SUMMARY OF THE INVENTION

One purpose of the present invention is to provide a mini LED diffuser that can realize a high transmittance while ensuring a high haze. Moreover, arrangement of microstructures, such as microlenses, is particularly designed, and a superposed photolithography technology is used, to overcome a positioning error of a laser head of a lithography machine, thereby ensuring high quality and a high yield. A manufacturing process for the mini LED diffuser and a backlight module using the mini LED diffuser are further provided.

The diffuser herein may alternatively be referred to as a diffusion film when a thickness thereof is relatively small. For ease of description, in the specification, the diffuser and the diffusion film are collectively referred to as a diffuser.

In order to achieve the purpose of the invention, according to one aspect of the present invention, the present invention provides a mini LED diffuser, comprising a substrate, a plurality of microstructures disposed on one side of the substrate, and a filling structure disposed on the other side of the substrate. The microstructures comprises a plurality of microlens structures and/or a plurality of convex lenses, the filling structure comprises a plurality of structural units, each structural unit comprises a plurality of filling patterns distributed based on equal density lines, and a distribution density of the filling patterns in one structural unit gradually decreases from a center of the one structural unit toward a periphery. Each of the filling patterns is a groove structure, and each of the filling patterns is filled with a reflective material.

Further, each of the microlens structures comprises a recessed structure and/or a protrusion structure, the plurality of microlens structures are arranged in a plurality of rows, the plurality of microlens structures in two adjacent rows are arranged in an staggered, random, or orthogonal manner, two adjacent microlens structures partially overlap, a protruding surface of the protrusion structure is a curved surface, and a recessed surface of the recessed structure is a curved surface.

Further, a size of each microlens structure is in a range of 0.03 mm to 0.09 mm, and a depth or a height of each microlens structure is in a range of 0.01 mm to 0.05 mm.

Further, a thickness of the substrate is in a range of 0.1 mm to 2.0 mm, and a range of overlapping between two adjacent microlens structures is 5% to 25%.

Further, each of the convex lenses is in a shape of one or more of a prism, a pyramid, a semi-cylinder, and a cone, or is in a composite shape composed of one or more of the prism, the pyramid, the semi-cylinder, and the cone according to a set rule. A height of each convex lens is in a range of 0.01 mm to 0.1 mm, and when the convex lens is in the shape of a cone, a cone angle thereof is in a range of 60 degrees to 120 degrees
Further, each of the filling patterns is in a shape of a cylindrical counterbore, and a groove bottom of the filling pattern is in a shape of a circular arc; the reflective material is one or a combination of reflective ink, metallic silver, and metallic aluminum; and a size of each filling pattern is in a range of 0.005 mm to 0.1 mm, and a depth of each filling pattern is in a range of 0.004 mm to 0.05 mm.

According to another aspect of the present invention, the present invention further provides a manufacturing process for the foregoing mini LED diffuser, comprising: providing two mold rollers, wherein a plurality of first patterned structures corresponding to shapes of the microstructures are disposed on a surface of one of the mold rollers, adjacent first patterned structures partially overlap, and a plurality of second patterned structures corresponding to shapes of the filling patterns are disposed on a surface of the other of the mold rollers; impressing or extruding a material for forming the mini LED diffuser to obtain a semi-finished diffuser having the microstructures and the filling structure on both sides thereof respectively; and filling the filling structure with a reflective material and obtaining the mini LED diffuser by curing and molding.

Further, the material for forming the diffuser comprises diffusion particles and a transparent organic polymer material, and the manufacturing process further comprises: mixing the diffusion particles and the transparent organic polymer material and then melting same to a molten state; extruding the melted material through a flow channel formed between the two mold rollers; obtaining the semi-finished diffuser having the microstructures and the filling structure on both sides thereof respectively after cooling and curing; and filling the filling structure with the reflective material and obtaining the mini LED diffuser by curing and molding.

Further, the material for forming the diffuser comprises a base material layer and a UV-cured resin, and the manufacturing process further comprises: uniformly coating the UV-cured resin on a surface of the base material layer; attaching the mold rollers with the patterned structures to the base material layer coated with the UV-cured resin, curing a UV-cured resin layer on the surface of the base material layer, and forming a solid UV-cured resin layer on the surface of the base material layer, to obtain the semi-finished diffuser having the microstructures and the filling structure on both sides thereof respectively; and filling the filling structure with the reflective material and obtaining the mini LED diffuser by curing and molding
According to another aspect of the present invention, the present invention provides a backlight module, comprising the foregoing mini LED diffuser.

Further, the backlight module further comprises a lamp bead panel, a blue light film, a quantum dot film, a first brightness enhancement film, a second brightness enhancement film, and a diffusion film disposed in sequence, wherein the mini LED diffuser is disposed between the lamp bead panel and the blue light film, at least one layer of mini LED diffuser is disposed, the side of the mini LED diffuser filled with the reflective material faces the lamp bead panel, and each of the structural units on the mini LED diffuser corresponds one of lamp beads on the lamp bead panel.

The present application has one or more of the following beneficial effects:
(1) The mini LED diffuser of the present application is provided with the microstructures on one side and provided with the filling structure filled with the reflective material on the other side, so that the diffuser has a relatively high haze, thereby ensuring an effective diffusion effect of the diffuser on light emitted by mini LED lamp beads.
(2) The mini LED diffuser of the present application is provided with the microstructures on one side. In particular, during manufacturing of a relatively thick diffuser, diffusion particles required to be added can be reduced, and the high haze can be ensured while realizing a high transmittance, thereby reducing a demand for a power of a mini LED. In this way, power consumption and to-be-dissipated heat are reduced, a service life of the mini LED is prolonged, and the mini LED is more environmentally friendly.
(3) In the mini LED diffuser of the present application, the microstructures partially overlap, so that a proportion of space occupied by the microstructures on the diffuser can reach 100%. Moreover, a positioning error of a laser head of a lithography machine can be overcome.
(4) The mini LED diffuser of the present application is filled with the reflective material at a varying density on the other side. The distribution density of the filling patterns adjacent to the lamp beads is greater than the distribution density of the filling patterns away from the lamp beads, so that the diffuser has higher reflection efficiency at positions adjacent to the lamp beads than positions away from the lamp beads. In this way, the lamp bead panel can emit light uniformly, utilization efficiency of light is improved, a realistic visual effect is realized, and a higher dynamic range and a higher contrast are realized.

### BRIEF DESCRIPTION OF THE DRAWINGS

FIG. 1 is a three-dimensional schematic structural diagram of a diffuser according to an embodiment I of the present application from an angle;
FIG. 2 is a three-dimensional schematic structural diagram of the diffuser according to the embodiment I of the present application from another angle;
FIG. 3a to FIG. 3c are schematic arrangement diagrams of partial microlens structures on the diffuser according to the embodiment I of the present application;
FIG. 4 is a schematic structural cross sectional view of the diffuser according to the embodiment I of the present application;
FIG. 5a and FIG. 5b are arrangement effect diagrams of microlens structures of the diffuser according to the embodiment I of the present application;
FIG. 6 is a structural cross sectional view of the diffuser according to the embodiment I of the present application when an error exists;
FIG. 7 is an arrangement effect diagram of the microlens structures of the diffuser according to the embodiment I of the present application when an error exists;
FIG. 8 is another arrangement effect diagram of the microlens structures of the diffuser according to the embodiment I of the present application when an error exists;
FIG. 9 is a schematic arrangement diagram of filling patterns of the diffuser according to the embodiment I of the present application;
FIG. 10 is a schematic diagram of filling the filling patterns of the diffuser according to the embodiment I of the present application with a reflective material;
FIG. 11 is a schematic structural diagram of a filling pattern filled with the reflective material according to the embodiment I of the present application;
FIG. 12 is a schematic position diagram of the filling patterns and lamp beads according to the embodiment I of the present application;
FIG. 13 is a schematic structural diagram of a device configured to manufacture the diffuser according to the embodiment I of the present application;
FIG. 14 is a schematic structural diagram of another device configured to manufacture the diffuser according to the embodiment I of the present application;
FIG. 15 is a schematic structural diagram of layers of a backlight module according to the embodiment I of the present application;
FIG. 16 is a schematic position diagram of the diffuser and the lamp bead in the backlight module according to the embodiment I of the present application;
FIG. 17 is a schematic position diagram of the diffuser and the lamp bead in the backlight module according to an embodiment II of the present application;
FIG. 18 is a three-dimensional schematic structural diagram of the diffuser when each convex lens is in the shape of a triangular pyramid according to an embodiment III of the present application;
FIG. 19 is a schematic structural diagram of the diffuser in FIG. 18 from a top view;
FIG. 20 is a schematic structural diagram of the diffuser in FIG. 18 from a side view;
FIG. 21 is a cross sectional view of position A in FIG. 19;
FIG. 22 is a three-dimensional schematic structural diagram of the diffuser when each convex lens is in the shape of a rectangular pyramid according to the embodiment III of the present application;
FIG. 23 is a schematic structural diagram of the diffuser in FIG. 22 from a top view;
FIG. 24 is a schematic structural diagram of the diffuser in FIG. 22 from a side view; and
FIG. 25 is a cross sectional view of position B in FIG. 23.

1-Boss-shaped structure, 2-Recess-shaped structure, 3-Molten material, 4-Mold roller, 5-Base material layer, 6-Dispensing head, 7-Extrusion roller, 8-Mold roller, 9-Guide roller, 10-Ultraviolet light, 11-Lamp bead panel, 111-Lamp bead, 12-Diffuser, 121-Substrate, 122-Microlens structure, 1221-Recessed structure, 1222-Protrusion structure, 123-Filling pattern, 1231-Reflective material, 124-Convex lens, 13-Blue light film, 14-Quantum dot film, 15-First brightness enhancement film, 16-Second brightness enhancement film, 17-Diffusion film, 18-Light homogenizer.

### DETAILED DESCRIPTION OF THE PREFERRED

### EMBODIMENTS

In order to further describe technical means adopted in the present invention to achieve the intended purposes of the present invention and effects thereof, specific implementations, structures, features, and effects of the present invention are described in detail below with reference to the drawings and preferred embodiments.

### Embodiment I

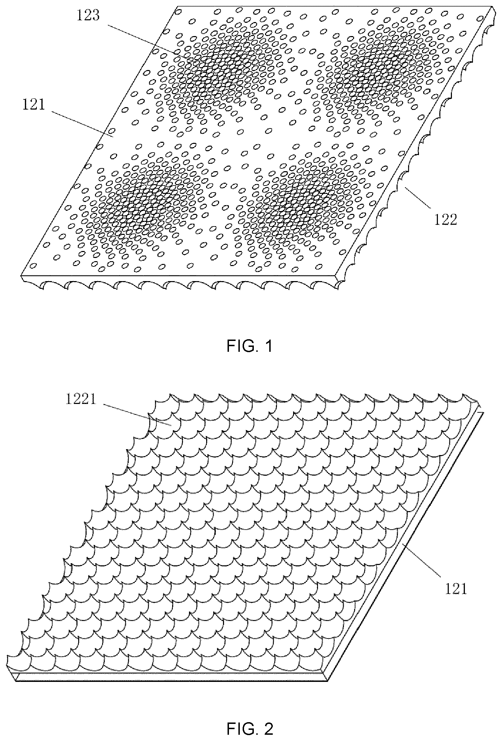

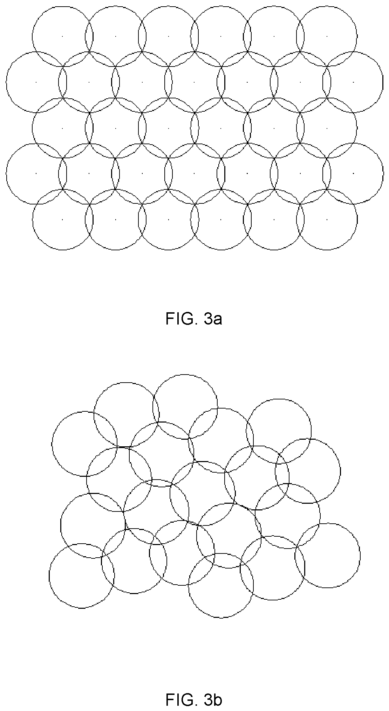

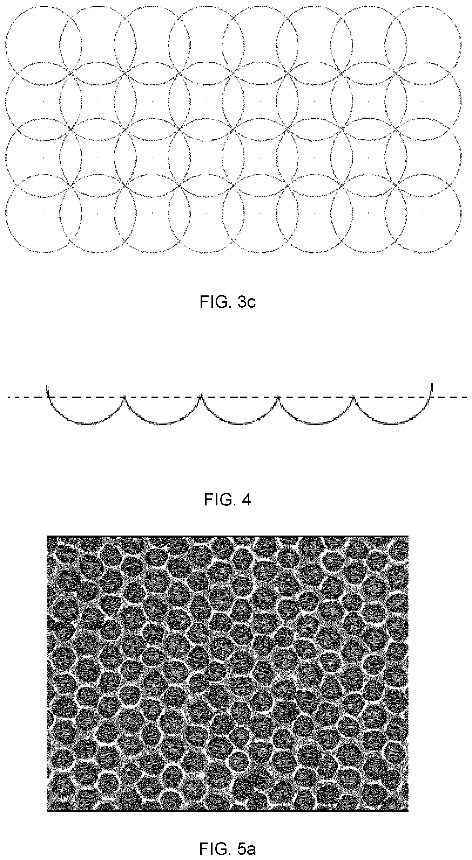

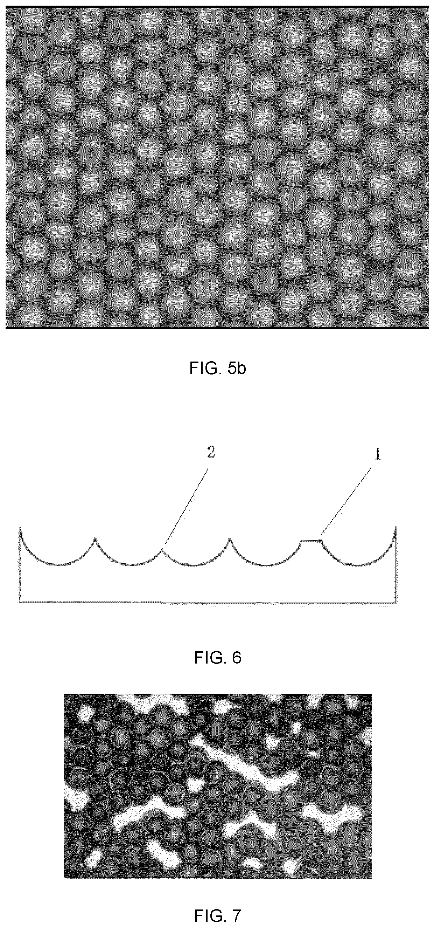

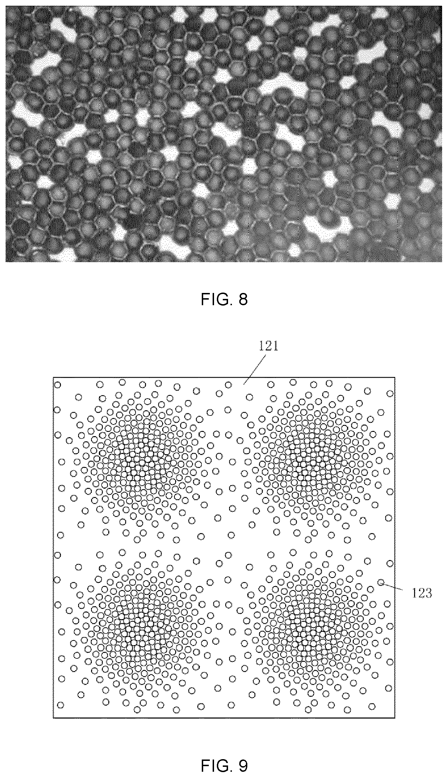

A mini LED diffuser is provided according to an embodiment I of the prensent invention. The mini LED diffuser comprises a substrate 121, a plurality of microlens structures 122 located on one side of the substrate 121, and a filling structure located on the other side of the substrate 121. As shown in FIG. 1 and FIG. 2, each of the microlens structures 122 shown in the figure is a circular recessed structure 1221. A recessed surface of the microlens structure 122 is preferably a curved surface. The plurality of microlens structures 122 are arranged in a plurality of rows. The plurality of microlens structures 122 in two adjacent rows are arranged in a staggered manner, as shown in FIG. 3a, or arranged in a random manner, as shown in FIG. 3b, or arranged in an orthogonal manner, as shown in FIG. 3c. Two adjacent microlens structures 122 partially overlap, as shown in FIG. 3a to FIG. 3c and FIG. 4. A range of overlapping between two adjacent microlens structures 122 is 5% to 25%, and preferably, is 10%. The design of partial overlapping between two adjacent microlens structures 122 can not only effectively increase a coverage range of the microlens structures 122 on the diffuser, so that a proportion of occupied space can reach 100%, as shown in FIG. 5a and FIG. 5b, but also overcome a positioning error of a laser head of a lithography machine. Current lithography machines on the market have a positioning precision in a range of 4 µm to 5 µm. During photolithography is performed on a lithographic piece, a positioning error may lead to a gap between patterned structures formed through the photolithography, thus forming a boss-shaped structure 1 and a recess-shaped structure 2, as shown in FIG. 6. During impression or extrusion to form the microlens structure 122 on the diffuser, the structures may result in areas without the microlens structure 122 on the diffuser, as shown in FIG. 7 and FIG. 8. As a result, a diffusion effect of the diffuser is affected.

The diffusion effect of the diffuser relates to a radius of curvature and a size of the microlens structure 122. Preferably, the size of the microlens structure 122 is in a range of 0.03 mm to 0.09 mm, a depth is in a range of 0.01 mm to 0.05 mm, and the radius of curvature is in a range of 0.06 mm to 0.2 mm. It should be noted that the foregoing relevant parameter ranges of the microlens structure 122 are a preferred range of the present application. During specific implementation, the relevant parameters of the microlens structure 122 may be designed as required.

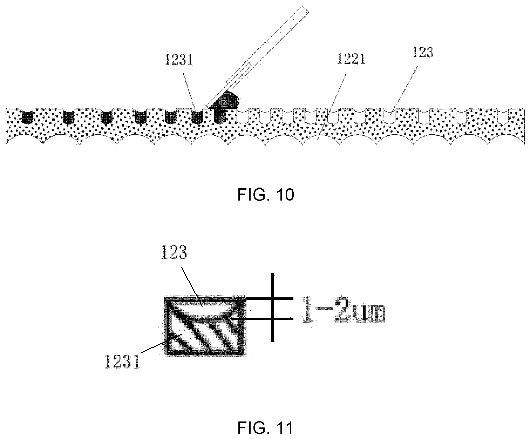

The filling structure comprises a plurality of structural units. The structural units comprise a plurality of filling patterns 123 distributed based on equal density lines. The distribution density of the plurality of filling patterns 123 in one structural unit gradually decrease from a center of the one structural unit toward a periphery. As shown in FIG. 9 to FIG. 12, the filling patterns 123 are distributed non-uniformly on the diffuser. Some areas have the filling patterns 123 distributed at a relatively large density, and some areas have the filling patterns distributed at a relatively small density. In each structural unit, the distribution density of the filling patterns 123 adjacent to a center (that is, adjacent to lamp beads 111) is greater than the distribution density of the filling patterns 123 away from the center (that is, away from the lamp beads 111). Each of the plurality of filling patterns 123 is a groove structure, and the filling pattern 123 is filled with a reflective material 1231, as shown in FIG. 10. Preferably, the filling pattern 123 is in the shape of a cylindrical counterbore, and a groove bottom of the filling pattern 123 is in the shape of a circular arc. A sectional shape thereof is circular, square, or any other shape, and preferably, is circular. A size of the groove structure is in a range of 0.005 mm to 0.1 mm, and a depth of the groove structure is in a range of 0.004 mm to 0.05 mm. The filling pattern 123 in the shape of the cylindrical counterbore can ensure that the reflective material 1231 can be perfectly filled into the filling pattern 123 when the reflective material 1231 is scraped and coated, thereby effectively avoiding a failure in filling the reflective material 1231 or removal of the reflective material during the scraping and coating process.

The reflective material 1231 is one of reflective ink, metallic silver, and metallic aluminum, but is not limited thereto. The reflective material may be another reflective material, or may be a mixture of a plurality of reflective materials. The reflective material is preferably reflective ink. The reflective material 1231 is configured to reflect light. Light reflected by the reflective material 1231 can be reflected to the diffuser via a lamp bead panel 11. In this way, light energy is fully utilized, and overall uniformity of light can be increased. It should be noted that the reflective material 1231 formed by a mixture of reflective ink with metallic silver or metallic aluminum is an existing material. During filling, volatile components such as water are added to the reflective material 1231. Therefore, during curing of the reflective material 1231, a middle position of the reflective material 1231 in each filling pattern 123 is recessed inwardly by approximately 1 µm to 2 µm, forming a recessed surface on outside of the reflective material 1231, as shown in FIG. 11. The recessed surface can effectively change a propagation direction of light emitted by the lamp beads 111, which improves a diffusion effect of the diffuser on the light emitted by the lamp beads 111.

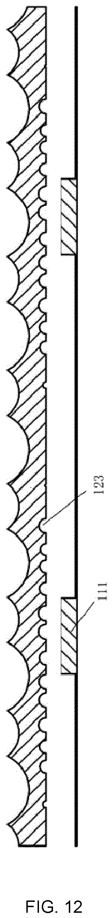

Through the foregoing design of the varying density, high-intensity light adjacent to the lamp beads 111 has a poor light transmission effect and a favorable light diffusion effect when passing through the filling patterns 123 with a relatively high aggregation coefficient, while low-intensity light away from the lamp beads 111 has a favorable light transmission effect and a poor light diffusion effect when passing through the filling patterns 123 with a relatively low aggregation coefficient. In this way, the diffuser has higher reflection efficiency at positions adjacent to the lamp beads 111 than positions away from the lamp beads 111, thereby achieving uniform light emission from a surface of the diffuser and eliminating non-uniform brightness of the lamp beads 111. It should be noted that in each structural unit on the diffuser, an area with filling patterns 123 distributed in a relatively large density corresponds to one lamp bead 111, and an area with filling patterns 123 distributed in a relatively small density corresponds to an area between two lamp beads 111, as shown in FIG. 12. That is to say, a plurality of filling patterns 123 exist at a position on the diffuser corresponding to each lamp bead 111, and the distribution density of the filling patterns 123 decreases with an increase of a distance from the lamp bead 111.

A thickness of the substrate 121 of the diffuser is in a range of 0.1 mm to 2.0 mm. A thicker substrate 121 of the diffuser indicates a larger haze of the diffuser. A thinner substrate 121 indicates a higher transmittance of the diffuser. In the diffuser of the present application, two sides of the substrate 121 are respectively provided with the microlens structures 122 and the filling structure, which can not only ensure the haze of the diffuser, but also improve the transmittance of the diffuser. For example, during manufacturing of a relatively thick diffuser (with a thickness greater than 0.6 mm), in order to ensure the haze of the diffuser, diffusion particles are added to a material for manufacturing the diffuser. However, the diffusion particles absorb light, which affects the transmittance of the diffuser. The microlens structures 122 of the present application can reduce a quantity of diffusion particles required to be added during manufacturing of the diffuser, and reduce absorption of light by the diffusion particles, which significantly improves the transmittance of the diffuser while ensuring the haze of the diffuser. It is learned through tests that the haze of the diffuser in the present application can reach 95%, and the transmittance can reach 85%, which is much higher than a transmittance of an existing diffuser in a range of 50% to 60%. The improvement in the transmittance can reduce a demand for a power for a mini LED. In this way, power consumption and to-be-dissipated heat are reduced, a service life of the mini LED is prolonged, and the mini LED is more environmentally friendly.

In this embodiment, a manufacturing process for the foregoing mini LED diffuser is further provided. Specific steps are as follows:
Step S1: a plurality of first patterned structures corresponding to shapes of the microlens structures 122 is formed on a side of a first lithographic piece, wherein adjacent first patterned structures partial overlap through photoetching; and a plurality of second patterned structures corresponding to the shapes of the filling patterns 123 on a side of a second lithographic piece through photoetching. The first lithographic piece and the second lithographic piece may be a glass substrate coated with photoresist on a single side. Afterwards, a photoresist layer is exposed according to a required pattern, and a developed part is etched to form a plurality of recessed patterned structures on the photoresist layer. The first lithographic piece and the second lithographic piece may also be made of specular metal materials. The metal materials may be stainless steel, nickel, copper, or the like. A high-power pulsed laser is directly caused to pass through an optical shaping path to focus on a surface of a metal base material for photolithography, thereby forming a desired patterned structure.
Step S2: the patterned structures on the obtained lithographic piece are transferred to a template by using an UV transfer printing technology or a metal growth technology, to obtain a template having the patterned structures. In this embodiment, the recessed first patterned structures on the first lithographic piece are transferred to a surface of the template through UV transfer, to obtain a first template having protruding patterned structures on the surface thereof. The recessed second patterned structures on the second lithographic piece are transferred to a surface of another template to obtain a second template having protruding patterned structures on a surface. Alternatively, the first template having the protruding patterned structures on the surface thereof and the second template having the protruding patterned structures on the surface thereof may be obtained through metal growth by electroforming. Certainly, the first template and the second template may be obtained in another manner.
Step S3: the first template and the second template are wrapped on two mold rollers 4 respectively, and a material for forming the diffuser is impressed or extruded, to obtain a semi-finished diffuser having the microlens structures 122 and the filling structure on both sides thereof respectively.
Step S4: the filling structure is filled with a reflective material 1231, and a finished diffuser is obtained by curing and molding.

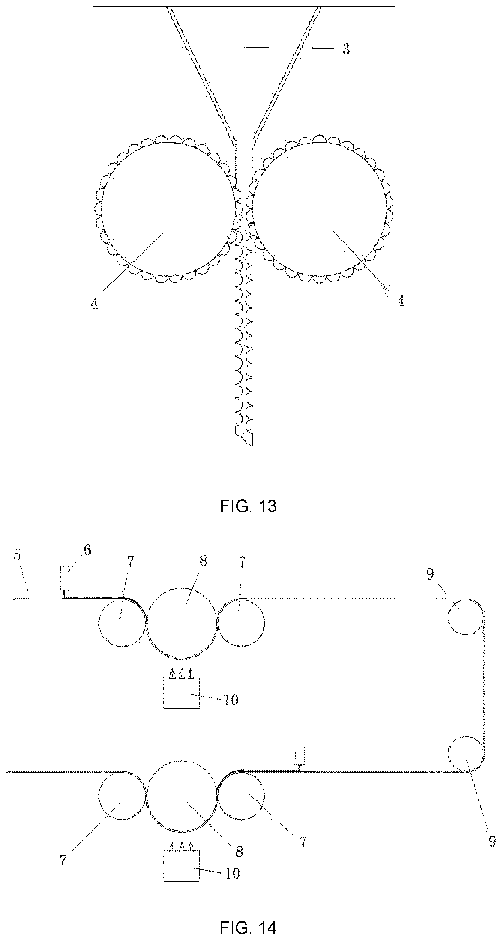

In step S3, when a relatively thick diffuser needs to be manufactured, the diffuser is preferably integrally formed through extrusion, which requires an extrusion device. The extrusion device comprises two mold rollers 4 for extrusion. The two mold rollers 4 are arranged parallelly and spaced apart from each other. An extrusion flow channel is formed between the two mold rollers. The first template and the second template are respectively wrapped around outside of the two mold rollers 4, and the patterned structures on the first template and the second template are oriented outward, as shown in FIG. 13. The material for forming the diffuser comprises diffusion particles and a transparent organic polymer material. The transparent organic polymer material is any of PET, PC, and PMMA, but is not limited to these materials, which is not enumerated herein. The diffusion particles may be PET diffusion particles, PC diffusion particles, or PMMA diffusion particles. The diffusion particles are white diffusion particles or yellow diffusion particles, and preferably, are white diffusion particles, but are not limited to these diffusion particles. The diffusion particles may also be diffusion particles of another color. Specific manufacturing steps are as follows:
Step S311: the diffusion particles and the transparent organic polymer material are mixed and then melt to a molten state.
Step S312: the melted molten material 3 is added to an extrusion flow channel of the extrusion device for extrusion, and a distance between the two mold rollers 4 is adjusted to obtain a primary finished uniform diffuser with a corresponding thickness.
Step S313: a semi-finished diffuser having the microlens structures 122 and the filling structure on the surfaces of the two sides respectively is obtained after cooling and curing. It should be noted that in this step, the cooling may be either natural cooling or cooling through cooling rollers, but is not limited to these manners, and may also be another cooling manner.

This embodiment further provides another manufacturing method, which is applicable to manufacturing of a relatively thin diffuser. It should be noted that, the diffuser herein may alternatively be referred to as a microlens diffusion film when a thickness thereof is relatively small. For ease of description, in the specification, the diffuser and the diffusion film are collectively referred to as a diffuser. A material for forming the diffuser in this method comprises a base material layer 5 and a UV-cured resin. The base material layer 5 is any of PET, PC, and PMMA, but is not limited to these materials, which is not enumerated herein. As shown in FIG. 14, specific manufacturing steps are as follows:
Step S321: the base material layer 5 is provided. The base material layer 5 is any of PET, PC, and PMMA, but is not limited to these materials, which is not enumerated herein, or may be a diffusion material added with the diffusion particles.
Step S322: the UV-cured resin is coated on a surface of the base material. For example, the UV-cured resin is coated on a surface of the base material layer 5 through a dispensing head 6 shown in FIG. 14, and then optionally, the UV-cured resin is cured by using an ultraviolet pre-curing device to form a semi-solid UV-cured resin layer on the surface of the base material layer 5. The ultraviolet pre-curing device may be, for example, a low-power ultraviolet light, and can transform a UV-cured resin from an original liquid state into a semi-solid state for impression.
Step S323: UV impression is performed on the UV-cured resin layer by using a mold roller 8 having the patterned structure on a surface. A manner of manufacturing the mold roller 8 is the same as that in steps S1 to S3. During impression, the side of the mold roller 8 with the patterned structure is caused to snugly contact the UV-cured resin through an extrusion roller 7, and then a patterned structure on the UV-cured resin is irradiated with an ultraviolet light 10 so that the patterned structure is formed before being removed from the mold roller 8. The patterned structure on the surface of the mold roller 8 is transferred to the surface of the base material layer 5.
Step S324: the base material layer 5 is flipped by using a guide roller 9, the UV-cured resin is uniformly coated on a surface of the other side of the base material layer 5, another mold roller 8 is attached to the base material coated with the UV-cured resin, a UV-cured resin layer on the surface of the base material layer 5 is cured, and a solid UV-cured resin layer on the surface of the other side of the base material layer 5 is formed to obtain the semi-finished diffuser having the microlens structures 122 and the filling structure on the surfaces of the two sides respectively.
Step S325: the filling structure is filled with the reflective material 1231, and the finished diffuser is obtained by curing and molding.

In this manufacturing method, the two sides of the manufactured semi-finished diffuser are respectively provided with the microlens structures 122 and the filling structure. Therefore, during impression, each single side may be impressed independently in sequence, or the two sides may be simultaneously impressed. Principles of the two impression manners are substantially the same, and therefore the details are not described herein.

It should be noted that in the foregoing two manufacturing methods, the mold roller may be manufactured by attaching a template with a required patterned structure on a surface thereof, or the required patterned structure may be directly manufactured on the surface of the mold roller. The template or the mold roller may be made of materials such as nickel, steel, copper, or aluminum.

This embodiment further provides a backlight module, comprising the foregoing mini LED diffuser 12.

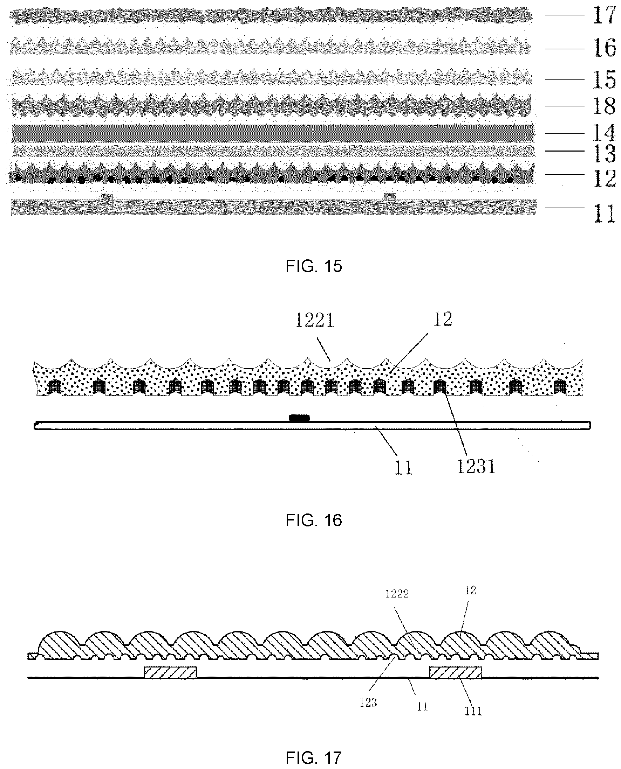

The backlight module further comprises the lamp bead panel 11, a blue light film 13, a quantum dot film 14, a first brightness enhancement film 15, a second brightness enhancement film 14, and a diffusion film 17 arranged in sequence, as shown in FIG. 15. The diffuser 12 is arranged between the lamp bead panel 11 and the blue light film 13. At least one layer of diffuser 12 is arranged. A side of the diffuser 12 filled with the reflective material 1231 faces the lamp bead panel 11, as shown in FIG. 16. Each of the structural units on the diffuser 12 corresponds one of the lamp beads 111 on the lamp bead panel 11. In addition, one or more layers of light homogenizers may be added between the blue light film 13 and the diffusion film 17 or between the first brightness enhancement film 15 and the quantum dot film 14 as required. The light homogenizers may be provided with the microlens structure 122 on both sides, or may be provided with the microlens structures 122 on one side and a convex lens on the other side, as shown in FIG. 15.

### Embodiment II

A difference between this embodiment II and the embodiment I is that the microlens structures 122 on one side of the diffuser in this embodiment II is a circular protrusion structure 1222, as shown in FIG. 17. A protruding surface of the microlens structure 122 is preferably a curved surface. A manufacturing method for the diffuser and a backlight module structure using the diffuser in this embodiment are the same as those in the embodiment I, and therefore the details are not described herein.

### Embodiment III

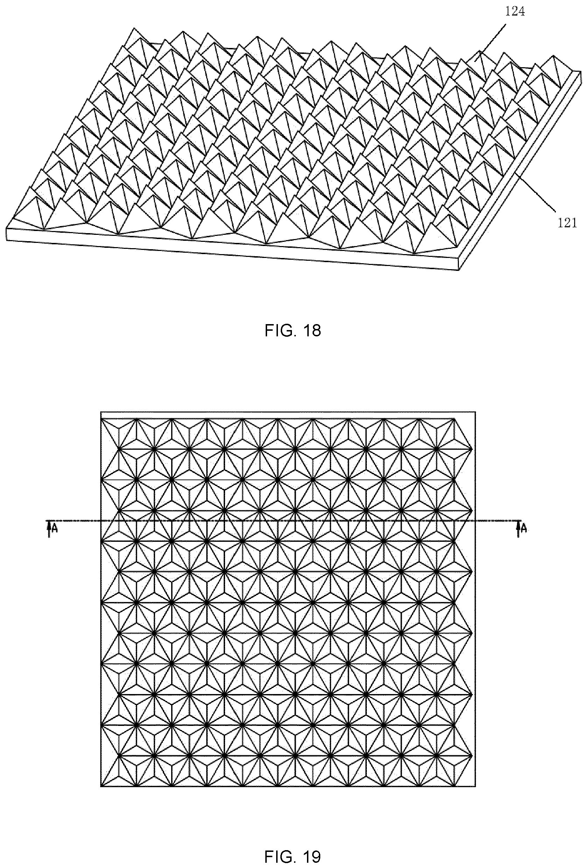

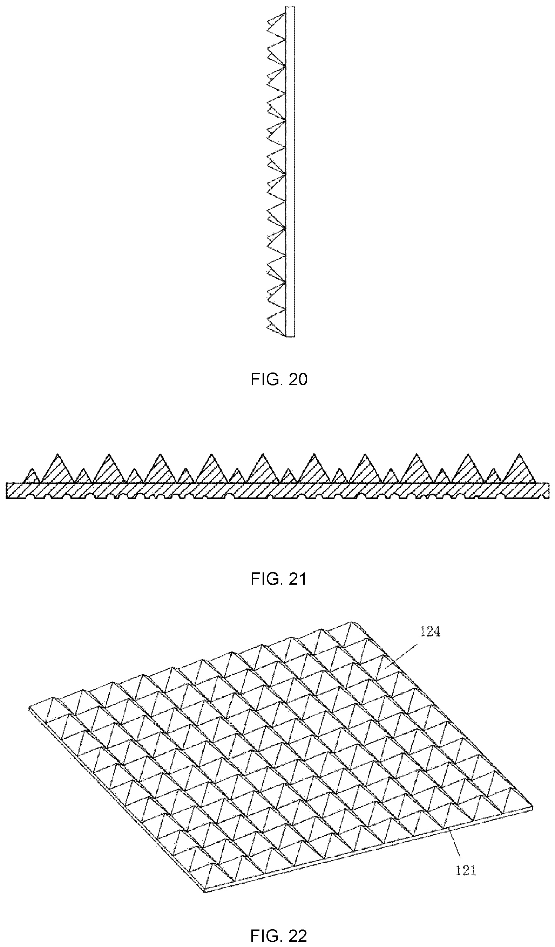

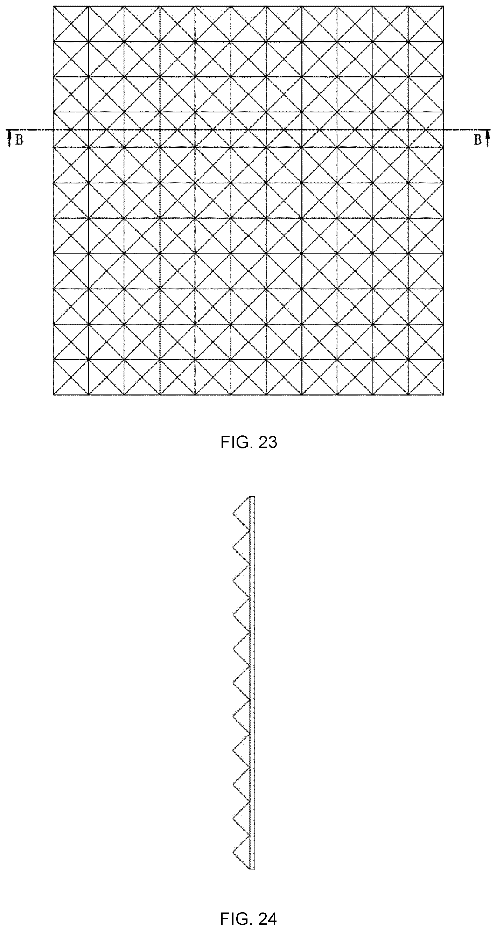

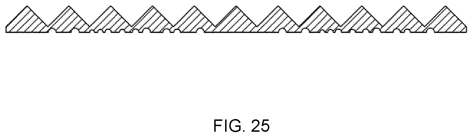

A difference between this embodiment III and the embodiment I is that the microstructures on one side of the diffuser in this embodiment is convex lenses 124. Each convex lens 124 is in the shape of one or more of a prism, a pyramid, a semi-cylinder, and a cone, or is in a composite shape composed of one or more of the shapes according to a set rule. When the convex lens 124 is in the shape of the prism (such as a triangular prism) or the semi-cylinder, the convex lenses 124 are arranged parallelly and sequentially on a side of the substrate 121, and an axis direction is parallel to the surface where the convex lenses are arranged. Bottom edges of two adjacent convex lenses 124 intersect. When the convex lens 124 is the shape of the pyramid, for example, a triangular pyramid shown in FIG. 18 to FIG. 21, or a quadrangular pyramid shown in FIG. 22 to FIG. 25, or the like, the convex lenses 124 are arranged sequentially. The bottom edges of two adjacent convex lenses 124 intersect, and the two bottom edges staggered each other coincide with a line of intersection, as shown in FIG. 19 or FIG. 23. Certainly, the convex lens 124 may alternatively be in the shape of another pyramid. This case is substantially the same, and therefore is not described in detail herein. When the convex lens 124 is in the shape of the cone, bottoms of the convex lenses 124 partially overlap. Similar to those of the microlens structure 122, a coverage range of the convex lenses 124 on the light homogenizer can be increased, and a proportion of occupied space can reach 100%. In addition, the convex lens 124 may alternatively be in the shape of a crossed semi-cylinder formed by two semi-cylinders, such as an orthogonal cylinder. The convex lenses present a grid shape on a side of the light homogenizer. Certainly, the convex lens may alternatively be in a composite shape obtained by staggered two prism shapes or other shapes. A size of the convex lens 124 is in a micrometer order. A height of the convex lens 124 is preferably in a range of 0.01 mm to 0.1 mm. When the convex lens 124 is in the shape of the cone, a cone angle thereof is preferably in a range of 60 degrees to 120 degrees. A preferred cone angle of a longitudinal section of the cone is 90 degrees.

A manufacturing method the diffuser for and a backlight module structure using the diffuser in this embodiment III are the same as those in the embodiment I, and therefore the details are not described herein.

Terms such as "comprise", "include" or any other variants herein are intended to encompass non-exclusive inclusion. In addition to those elements listed, another element not explicitly listed may also be included.

Directional words such as "front", "back", "up", and "down" herein are defined by positions of parts in the drawings and between the parts, and are merely used for clarity and convenience of description of the technical solutions. It should be understood that the use of the directional words should not limit the protection scope of the present application.

The foregoing embodiments herein and features in the embodiments may be combined with each other in a case that no conflict occurs.

## Claims

1. A mini LED diffuser, comprising a substrate, a plurality of microstructures disposed on one side of the substrate, and a filling structure disposed on an other side of the substrate,
wherein the microstructures comprises a plurality of microlens structures and/or a plurality of convex lenses, the filling structure comprises a plurality of structural units, each structural unit comprises a plurality of filling patterns distributed based on equal density lines, and a distribution density of the filling patterns in one structural unit gradually decreases from a center of the one structural unit toward a periphery,
wherein each of the filling patterns is a groove structure, and each of the filling patterns is filled with a reflective material.

2. The mini LED diffuser according to claim 1, wherein each of the microlens structures comprises a recessed structure and/or a protrusion structure, the plurality of microlens structures are arranged in a plurality of rows, the plurality of microlens structures in two adjacent rows are arranged in an staggered, random, or orthogonal manner, two adjacent microlens structures partially overlap, a protruding surface of the protrusion structure is a curved surface, and a recessed surface of the recessed structure is a curved surface.

3. The mini LED diffuser according to claim 2, wherein a size of each microlens structure is in a range of 0.03 mm to 0.09 mm, and a depth or a height of each microlens structure is in a range of 0.01 mm to 0.05 mm.

4. The mini LED diffuser according to claim 1, wherein a thickness of the substrate is in a range of 0.1 mm to 2.0 mm, and a range of overlapping between two adjacent microlens structures is 5% to 25%.

5. The mini LED diffuser according to claim 1, wherein each of the convex lenses is in a shape of one or more of a prism, a pyramid, a semi-cylinder, and a cone, or is in a composite shape composed of one or more of the prism, the pyramid, the semi-cylinder, and the cone according to a set rule; and a height of each convex lens is in a range of 0.01 mm to 0.1 mm, and when the convex lens is in the shape of the cone, a cone angle thereof is in a range of 60 degrees to 120 degrees.

6. The mini LED diffuser according to claim 1, wherein each of the filling patterns is in a shape of a cylindrical counterbore, and a groove bottom of the filling pattern is in a shape of a circular arc;
the reflective material is one or a combination of reflective ink, metallic silver, and metallic aluminum; and
a size of each filling pattern is in a range of 0.005 mm to 0.1 mm, and a depth of each filling pattern is in a range of 0.004 mm to 0.05 mm.

7. A manufacturing process for the mini LED diffuser according to claim 1, comprising:
providing two mold rollers, wherein a plurality of first patterned structures corresponding to shapes of the microstructures are disposed on a surface of one of the mold rollers, adjacent first patterned structures partially overlap, and a plurality of second patterned structures corresponding to shapes of the filling patterns are disposed on a surface of the other of the mold rollers;
impressing or extruding a material for forming the mini LED diffuser to obtain a semi-finished diffuser having the microstructures and the filling structure on both sides thereof respectively; and
filling the filling structure with a reflective material and obtaining the mini LED diffuser by curing and molding.

8. The manufacturing process for the mini LED diffuser according to claim 7, wherein the material for forming the diffuser comprises diffusion particles and a transparent organic polymer material, and the manufacturing process further comprises:
mixing the diffusion particles and the transparent organic polymer material and then melting same to a molten state;
extruding the melted material through a flow channel formed between the two mold rollers;
obtaining the semi-finished diffuser having the microstructures and the filling structure on both sides thereof respectively after cooling and curing; and
filling the filling structure with the reflective material and obtaining the mini LED diffuser by curing and molding.

9. The manufacturing process for the mini LED diffuser according to claim 7, wherein the material for forming the diffuser comprises a base material layer and a UV-cured resin, and the manufacturing process further comprises:
uniformly coating the UV-cured resin on a surface of the base material layer;
attaching the mold rollers with the patterned structures to the base material layer coated with the UV-cured resin, curing a UV-cured resin layer on the surface of the base material layer, and forming a solid UV-cured resin layer on the surface of the base material layer, to obtain the semi-finished diffuser having the microstructures and the filling structure on both sides thereof respectively; and
filling the filling structure with the reflective material and obtaining the mini LED diffuser by curing and molding.

10. A backlight module, comprising the mini LED diffuser according to claim 1.

11. The backlight module according to claim 10, further comprising a lamp bead panel, a blue light film, a quantum dot film, a first brightness enhancement film, a second brightness enhancement film, and a diffusion film disposed in sequence, wherein the mini LED diffuser is disposed between the lamp bead panel and the blue light film, at least one layer of mini LED diffuser is disposed, one side of the mini LED diffuser filled with the reflective material faces the lamp bead panel, and each of the structural units on the mini LED diffuser corresponds one of lamp beads on the lamp bead panel.
